Europäisches Patentamt

European Patent Office

Office européen des brevets

(11) Publication number: **0 243 186**
**A2**

## (12) EUROPEAN PATENT APPLICATION

(21) Application number: **87303589.3**

(22) Date of filing: **23.04.87**

(51) Int. Cl.³: **G 06 F 15/40**

(30) Priority: **25.04.86 JP 94875/86**

(43) Date of publication of application:
**28.10.87 Bulletin 87/44**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Tsukahara, Miho c/o Patents Division**
**Sony Corporation 6-7-35 Kitashinagawa**
**Shinagawa-ku Tokyo 141(JP)**

(72) Inventor: **Sharyou, Yasuo c/o Patents Division**
**Sony Corporation 6-7-35 Kitashinagawa**
**Shinagawa-ku Tokyo 141(JP)**

(74) Representative: **Thomas, Christopher Hugo et al,**
**D Young & Co 10 Staple Inn**
**London WC1V 7RD(GB)**

(54) Methods of forming files on random access type recording media.

(57) In a method of forming a plurality of files on a recording medium (10) in recording a data block (F10) which is to be a recording unit, such as a file itself, a file pointer (D10) or a directory which is a storage zone intended for recording an unrecorded data block (F20) having pertinence to the first-mentioned data block is reserved in such a manner that the continuity or correlation between the respective files can be maintained, and the retrieval of the files is facilitated without re-writing of the record contents.

*FIG. 1A*

## METHODS OF FORMING FILES ON RANDOM ACCESS
## TYPE RECORDING MEDIA

This invention relates to methods of forming files on random access type recording media, and more particularly, but not exclusively, to methods of forming tree-structure files on random access type recording media such as, for example, optical discs.

In general, in a random access type recording medium, such as an optical disc, an opto-magnetic disc, a hard disc or a floppy disc, when it is desired to have a more efficient access to a number of data blocks recorded on the medium, such as so-called files or file-related information or data, or to enable these files or data to be used by a plurality of users, it is thought to be desirable to form the file system in a so-called tree matrix or tree-structure.

In forming such a tree-structure file system, it has been usual, whenever a new file is to be added to the tree structure, for the pointer data in the relevant associated existing file to be re-written to clarify the relation, such as the membership relation, between the new and existing files.

In distinction from the well-known hard disc or floppy disc; with so-called direct-read-after-write (DRAW) media, such as certain optical discs susceptible only of recording, it is impossible to rewrite once-written record contents. Thus, it has been difficult to realise the tree-structure file system on DRAW media, that is, once-write type media.

According to the present invention there is provided a method of forming a tree-structure file system on a random access type recording medium;

characterized by the steps of:

providing a catalogue zone on the recording medium for forming file management data sets;

writing in said catalogue zone a root directory which is to be the parent of the tree-structure file system; and

reserving in said catalogue zone a storage area for storing one of said file management data sets for a first member of said root directory at the time that the root directory is written in said catalogue zone.

According to the present invention there is also provided a method of forming a tree-structure file system on a write-once random access type recording medium;

characterized by the steps of:

providing a catalogue zone on the recording medium for forming file management data sets;

writing in said catalogue zone a root directory which is to be the parent of the tree-structure file system and at that time reserving in said catalogue zone storage areas for separately storing file management data sets for descendant members of said root directory;

sequentially writing in said storage areas said root directory's descendant files and directories and at that time reserving in said catalogue zone a plurality of secondary storage areas for storing separate ones of said file management data sets for the descendant files or directories of each said root directory's descendants.

According to the present invention there is also provided a method of forming a tree-structure file system on a write once random access type recording medium;

characterized by the steps of:

providing a catalogue zone on the recording medium; and

writing in separate blocks in said catalogue zone a hierarchy of directories and files, including file management data sets for each of said directories and files, said file management data sets including the serial numbers of as yet unrecorded blocks in said catalogue zone for the brother and child files and directories of said directories and files being written in said catalogue zone.

According to the present invention there is also provided a method of forming a file system on a write once random access type recording medium;

characterized by the steps of:

forming on said medium a plurality of data blocks for storing related data;

recording data in said data blocks and recording in each data block at that time the location of the next data block in which related data is to be written.

Thus an embodiment of the present invention provides a method of forming a tree-structure file system on a random-access type recording medium, comprising the steps of providing a catalogue zone on the recording medium for forming management data sets, writing in said catalogue zone a root directory which is to be the parent of the tree-structure file system, and reserving in said catalogue zone a storage area for storing one of said management data sets for a first member of said root directory at the time that the root directory is written in the catalogue zone.

In recording a data block such as a file or file management data, the pointer data, that is, the data indicating at least the record zone of a data block which is to be related to or associated with the first mentioned block but on which no record has been made, is recorded simultaneously for reserving or appointing in advance a storage area for the unrecorded data block location on the recording medium. Then, in post-writing the new data block correlated with the existing data block, this new data block is necessarily recorded in the thus reserved or appointed storage location, so that the newly added data block can be retrieved by the pointer data recorded in the existing block such that the newly added correlated file can be retrieved on the basis of the existing file without re-writing the previously recorded data.

Thus, it is possible to retrieve the newly added correlated data blocks from the existing data blocks without data re-writing, such that a tree-structure file system can be easily formed on, for example, a writable recording medium or once-write recording medium.

The invention will now be described by way of example with reference to the accompanying drawings, throughout which like parts are referred to by like references, and in which:

Figures 1A and 1B are schematic views for explaining a file structure formed by a method according to a preferred embodiment of the present invention, wherein Figure 1A is a schematic view showing the file structure and Figure 1B shows the contents of a catalogue zone of a writable disc;

Figure 2 is a schematic view showing record zones in the writable disc;

Figure 3 is a block diagram for explaining the relation between the respective record zones;

Figure 4 shows an example of the tree-structure file system;

Figures 5A, 6A, 7A, 8A and 9A show the file structure being formed at the respective steps of the forming method of the present invention;

Figures 5B, 6B, 7B, 8B and 9B show the record contents of the catalogue zone formed at the respective steps shown in Figures 5A, 6A, 7A, 8a and 9A, respectively;

Figure 10 shows the structure of a typical block in the catalogue zone; and

Figure 11 is a schematic view for explaining a more generalized embodiment of the present invention.

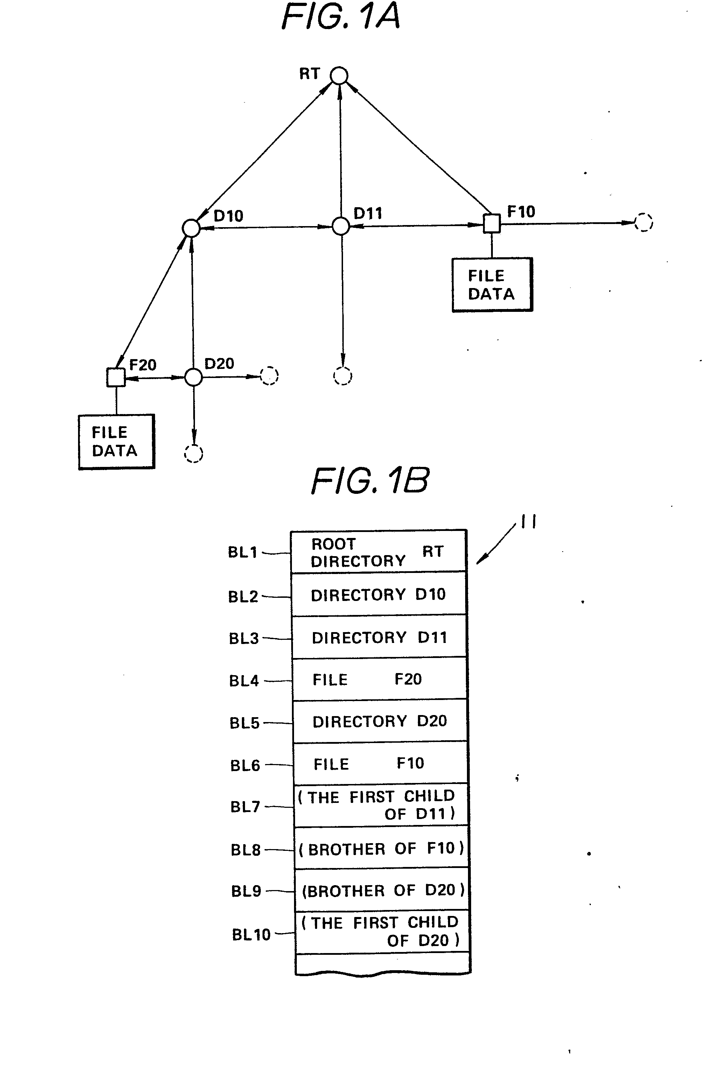

Figures 1A and 1B show an example of a file formed on a writable recording medium, such as an optical disc, by an embodiment of file forming method in accordance with the present invention. Figure 1A shows a file structure and Figure 1B the record contents in the index or catalogue information record zone, or a catalogue zone, on the record medium.

In Figure 1A, the vertical direction represents the hierarchy depth or level of the tree-structure or membership relation. A plurality of children or members derived from the same parent are termed brothers. In Figure 1A, the circles represent the file's catalogue information or so-called directory, while the squares represent a file such as a data file or a program file. Three child or member files, that is, directories D10 and D11 and a file F10, are provided to or derived from a parent or root directory RT. Also, two child or member files, that is, a file F20 and a directory D20, are provided to or derived from the directory D10 as the parent. The dotted-line circle represents unrecorded files including directories. The arrows in the drawing represent the access or retrieval direction. It is shown that at least the record zone of the file or directory at the point of the arrow can be identified from the file or directory at the root of the arrow.

Figure 1B shows the record contents of the index information record zone or catalogue zone 11 on the writable record medium such as a writable optical disc. In the catalogue zone 11 are recorded the index information data or file management data, also termed the catalogue, that is associated with the files or directories disposed at the respective nodes of the file structure shown in Figure 1A, such

as the file F20, the root directory RT and the directory D10. In this case, the respective file management information or data associated with the respective files or directories are recorded in blocks BL1, BL2, ... in the catalogue zone 11. This file management information may be typified by names of the files or directories, so-called allocation maps indicating storage locations of the files proper such as data files or program files, protective modes, or the pointer data indicating the aforementioned membership or brotherhood relations between the files and directories.

It will be noted that, at the time when a file or a directory is formed, no record is made of a file or a directory corresponding to the child or younger brother in the membership or brotherhood relations, so that it is impossible at this time to determine the aforementioned pointer data indicating the child's or younger brother's files or directories. In the present embodiment, unrecorded ones of the respective record blocks in the catalogue zone 11 are previously reserved or appointed as the storage location for the file management data for the child file or younger brother file in order to maintain a continuity between the existing and newly added files. In other words, storage area pointers for the file management data associated with the child's or younger brother's files and directories that are not as yet recorded, that is, serial numbers of the unrecorded blocks in the catalogue zone 11 are included in the file management data that are recorded at the same time that a given file or a directory is prepared. Then, when the child's or younger brother's file or directory is newly added, the file management data for such additional file can be stored in the appointed blocks in such a fashion that the newly added file can be retrieved from the management data of the existing file through the management data of the newly added file. It is to be noted that the pointers for the related existing files, such as the parent's or elder brother's files, can be stored without any inconveniences in the file information data of the newly added file, so that mutual retrieval will be made with no difficultly between the parent and the children or between the elder and younger brothers.

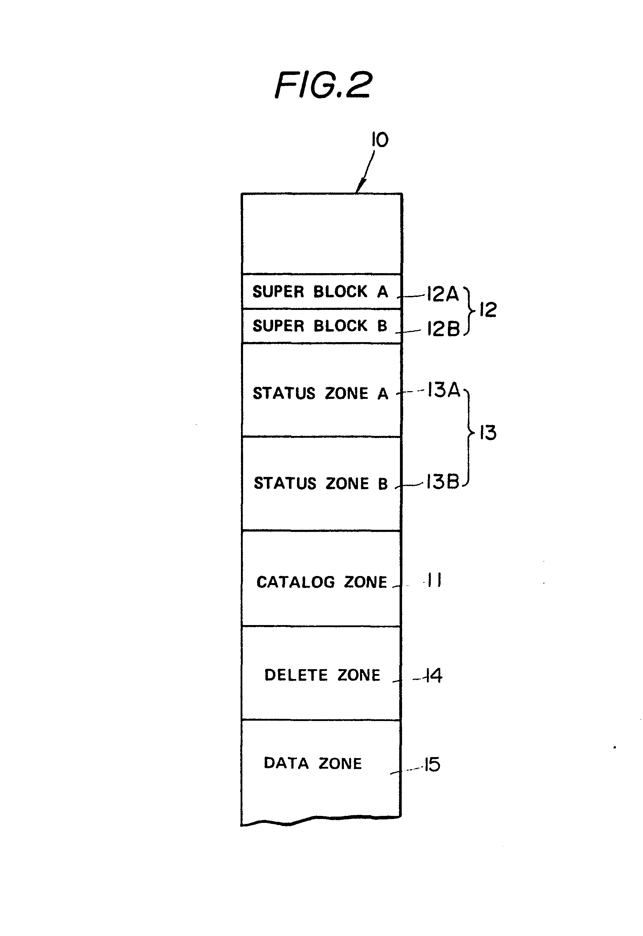

The catalogue zone 11 is one of five zones allocated on the writable record medium or writable disc 10 shown in Figure 2. A super block 12, a status zone 13, a delete zone 14 and a data zone 15 are provided on the disc 10 in addition to the catalogue zone 11. The smallest read/write unit for each of these zones 11 to 15 is termed herein the disc allocation unit having a size which is n times the sector size of the disc, wherein n is an integer. The disc allocation unit may be set for example to one sector. Each record block in the catalogue zone 11 is set for example to one such disc allocation unit. Actually, the super block 12 is composed of super blocks 12A and 12B and the status zone 13 is composed of status zones 13A and 13B. In the super blocks 12A and 12B and the status zones 13A and 13B, the same data, for example, may be written in redundancy for preventing the possible occurrence of data error or data loss.

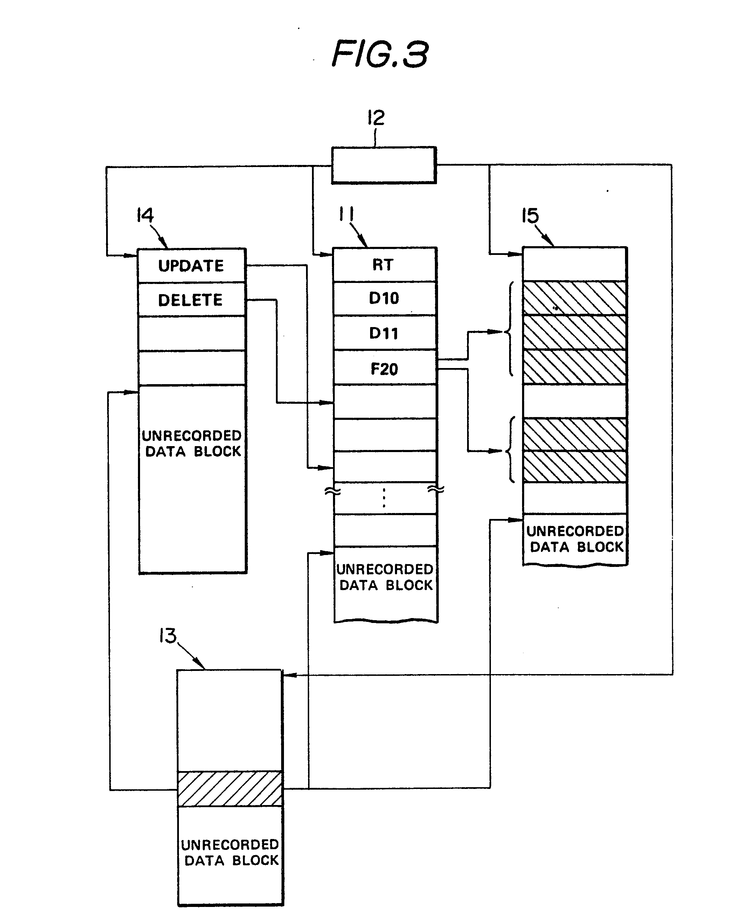

Referring now to Figures 2 and 3, the recording contents or format in each of the zones 11 to 15 will be described. The super block 12 is formed or written at the time that the logical formatting is made on one side of the writable disc 10. In this block 12, there are recorded disc identification data (discs ID) that can be designated by the user and that are each formed for example of thirty-two bytes, and leading addresses of the aforementioned zones 11 and 13 to 15. Thus, as shown in Figure 3, the leading positions of the zones 11 and 13 to 15 can be retrieved by reading the record contents of the of the super block 12. In the status zone 13, the data showing the data recording statuses in the zones 11, 14 and 15, such as the leading addresses of unrecorded sections in the zones 11, 14 and 15, are written as at the time of data updating or post-writing on the writable disc 10. In the catalogue zone 11, the aforementioned file management data are written as at the time of updating of the files or directories. For example, in the fourth block of the catalogue zone 11, there are recorded file management data concerning the aforementioned file F20. These management data for this file F20 include file names, allocation maps for the file F20 in the data zone 15 and the pointer data showing the parent-to-child or membership relation or brotherhood relation with other files or directories. In the delete zone 14, there are recorded data concerning updating or deletion of the record contents in the catalogue zone 11. Finally, in the data zone 15, there are recorded the actual contents of the files, or the files proper, that is, the image or text data.

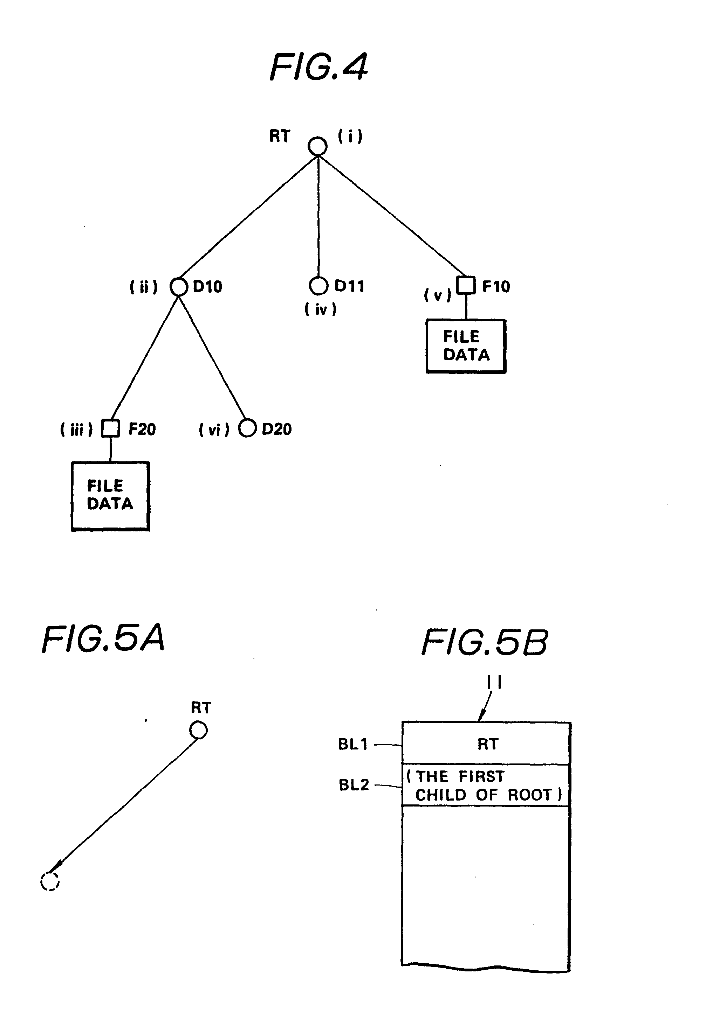

The file structure shown in Figure 1A corresponds to the file structure of the tree matrix shown in Figure 4. The sequence of forming such tree-structure files by a file forming method according to a preferred embodiment of the present invention and in the order of (i) to (iv) in Figure 4, will now be described by referring to Figures 5 to 9.

In the initial state shown in Figure 5A wherein there exists only the root directory RT, only the file management data concerning the root directory RT is recorded in, for example, the first block BL1 of the catalogue zone 11 shown in Figure 5B. These file management data include, in addition to the data concerning the protective mode and the name of the root directory RT, the pointer data indicating the storage location for the file management data for the first child or member of the root directory RT. In the present example, the second block BL2 of the catalogue zone 11 is the storage location for the file management data of the first member or child of the root directory RT. So long as the file or directory which is to be the first member or child of the root directory RT is not recorded as yet, nothing is recorded in the second block BL2. However, this block has now been reserved or appointed as the dedicated storage location for the file management data of the first member or child of the root directory RT such that the first member or child can be retrieved at all times from the directory RT. This state is indicated by the arrow directing from the circle of the directory RT of Figure 5A towards the dotted-line circle indicating the unrecorded file or directory. It is noted however that, so long as the file or directory which is to be the first member or child is not recorded as yet, it is not possible with the file management data at the root side of the arrow to determine whether or not the head of the arrow is in the unrecorded state. Thus, it becomes necessary to have access to the management data of the file at the head of the arrow to determine that the file is as yet not recorded.

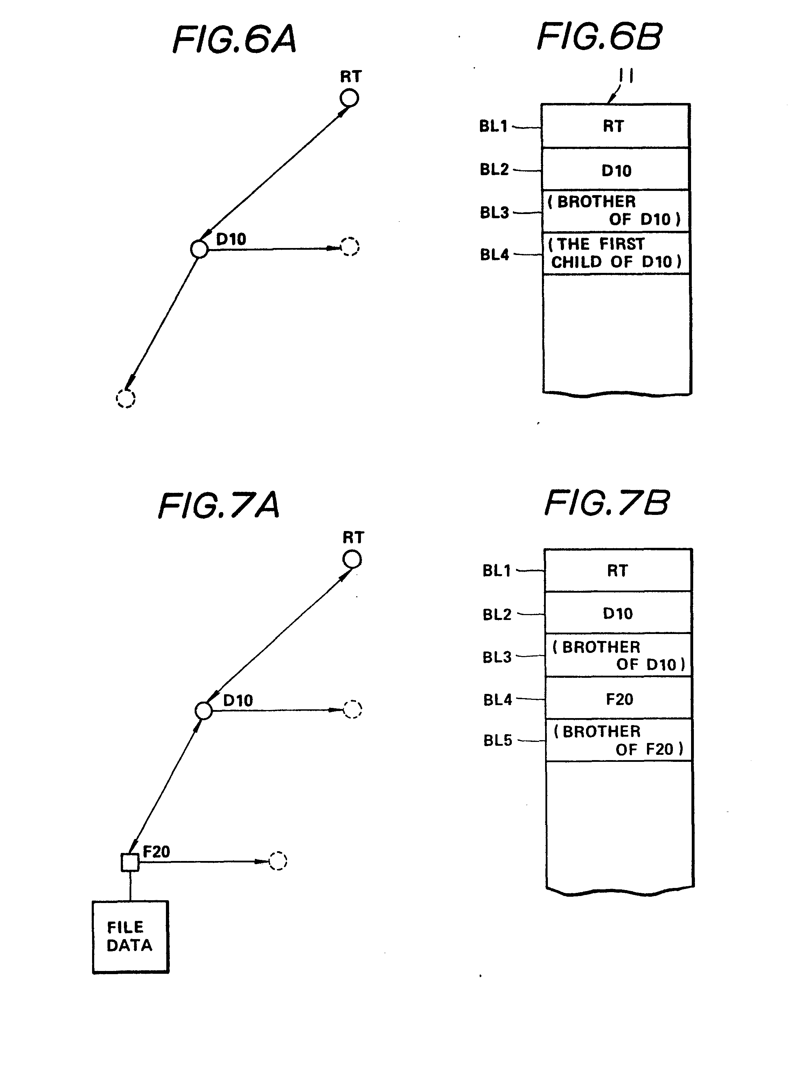

Then, when forming the directory D10 which is to be the first member or child of the aforementioned directory RT in accordance with the step (ii) shown in Figure 4, the file management data including the name, that is, the directory name, of the directory D10, the protective mode, and the pointer data of the root directory RT which is to be the parent, are recorded in the reserved second block BL2 in the catalogue zone 11 shown in Figure 6B, in association with the directory D10. It will be noted that the arrow interconnecting the directory D10 and the root directory RT which is to be the parent is now double-headed, thus meaning that not only can the directory D10 be retrieved from the root directory RT but also the root directory RT can be retrieved from the directory D10. The file management data for the directory D10 recorded in the second block BL2 also includes the pointers of the file management data for the younger brother and the first member or child of the directory D10. In the example of Figure 6B, the third block BL3 of the catalogue zone 11 is appointed as the storage location for the management data of the younger brother's file or directory to the directory D10, whereas the fourth block BL4 is appointed as the storage location for the file management data for the first member or child to the directory D10. Thus, in Figure 6A, the unrecorded file at the same level as the directory D10 in the transverse direction or at the same hierarchy depth represents the younger brother's file, whereas the unrecorded file lower than the directory D10 represents the first member file, with the arrows towards these unrecorded files indicating the reserve or appointed state. Thus, the files or directories can be retrieved in the direction of the arrows in Figure 6A.

The file F20 formed at the step (iii) in Figure 4 is the first member or child of the directory D10. Thus, during formation of the file F20, the associated file management data are recorded in the reserved fourth block BL4 in the catalogue zone 11 in Figure 6B. These management data for this file F20 include the point data for the file management data for the parent directory D10 and for F20's younger brother's file or directory and further include the file F20's name, protective mode and the data indicating the storage location of the file proper F20 in the data zone 15.

Thus, as shown in Figure 7A, the file F20 and the directory D10 are now interconnected by a double-headed arrow such that the file F20 and the directory D10 can retrieve each other, whereas the file F20 and the unrecorded file at the same hierarchy level as the file F20, or the aforementioned younger brother's file, are interconnected by a single-headed arrow such that it is only possible to retrieve the

unrecorded file from the file F20. At this time, the fifth block BL5 in the catalogue zone 11 shown in Figure 7B is now reserved or appointed as the storage location for the management data for the younger brother's file to the file F20.

It may be seen from above that, when a file node is added to a tree-structure file system, file management data is recorded simultaneously with the recording of the file but includes only the pointer for the file management data for the younger brother's file or the directory for reserving or appointing the storage location for the management data of the aforementioned unrecorded file. This is obvious from the fact that if the node of the tree structure is a file, it has no member or child file. On the other hand, when the added node is a directory, two pointers are recorded, namely a pointer for the file management data concerning the younger brother node, which may be a file or a directory, and another pointer for the file management data concerning the first child node, which may also be a file or a directory, such that the storage locations for the two file management data are previously reserved, or appointed.

When forming the directory D11 in the step (iv), the file management data for the directory D11 is recorded in the aforementioned third block BL3, which has been reserved as the storage location for the file management data concerning the directory D10's younger brother's file. The file management data for this directory D11 include not only the pointer for the root directory RT, which is to be the parent, and that for the directory D10, which is to be the elder brother, but also the pointers for the file management data for the directory D11's unrecorded younger brother file or directory and for the file management data for the directory D11's first child file or directory.

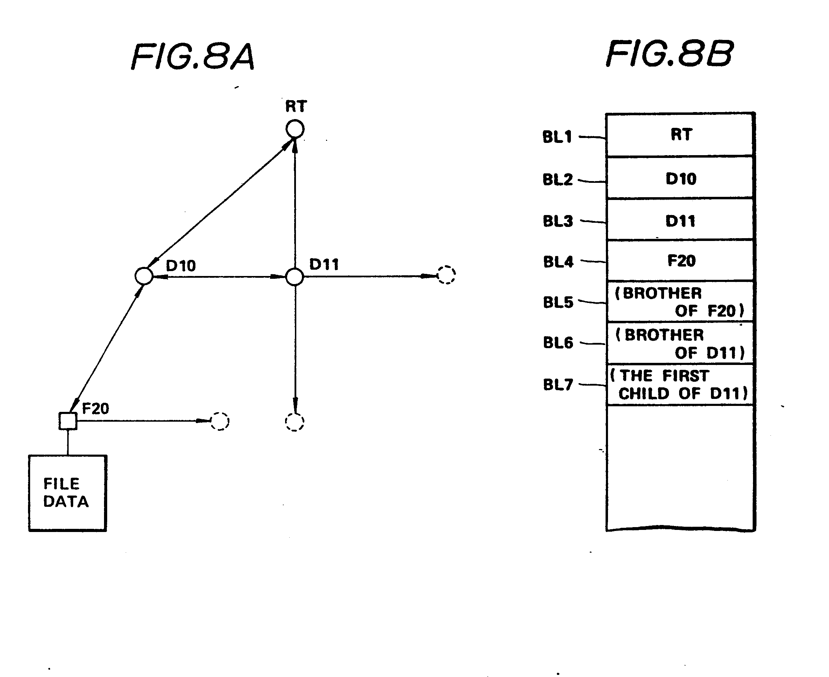

Thus, as shown in Figure 8A, it is possible to retrieve from the directory D11 the management data of the directory RT and two unrecorded files as indicated by the arrows directed to these files or directories. Furthermore, the directory D10 and the directory D11 are now interconnected by a double-headed arrow so that the directories D10 and D11 are in a position mutually to retrieve their respective management data. At this time, as shown in Figure 8B, the sixth block BL6 of the catalogue zone 11 is appointed as the storage location for the management data for the directory D11's aforementioned younger brother's file, whereas the seventh block BL7 of the catalogue zone 11 is reserved as the storage location for the management data of the aforementioned first member file, that is the first child of the directory D11.

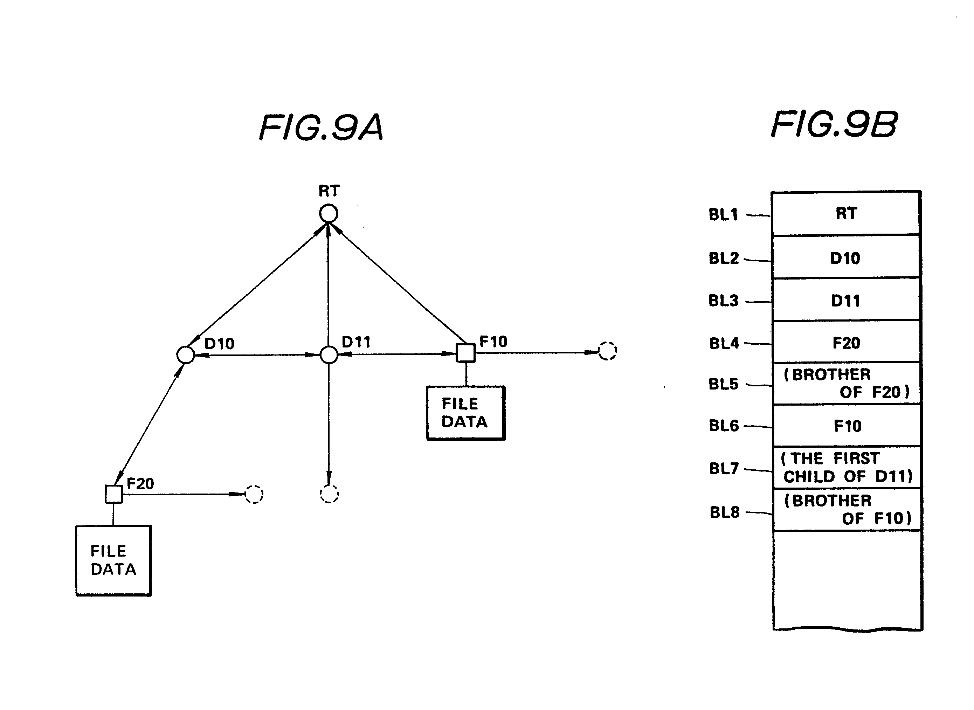

Then, in the next step (v), a file F10 which is the younger brother to the aforementioned directory D11 is formed at the same time that the management data for the file F10 is recorded in the sixth block BL6 of the catalogue zone 11. The management data of the file F10 include a pointer for the parent root directory RT, a pointer for the elder brother's directory D11 and the pointer for the younger brother's file or directory. The retrieval directions by these pointers are as indicated by the respective arrows in Figure 9A.

The directory D20 is then formed by the step (vi) in Figure 4, such that the state shown in Figures 1A and 1B is reached. The file management data concerning the directory D20 is recorded in the fifth block BL5 of the catalogue zone 11 shown in Figure 1B, while the ninth block BL9 is appointed as the storage location for the management data for the directory D20's younger brother file or directory and the tenth block BL10 is appointed as the storage location for the management data for the directory D20's first member file or directory. The retrieval directions between the files and the directories are as indicated by the arrows shown in Figure 1A.

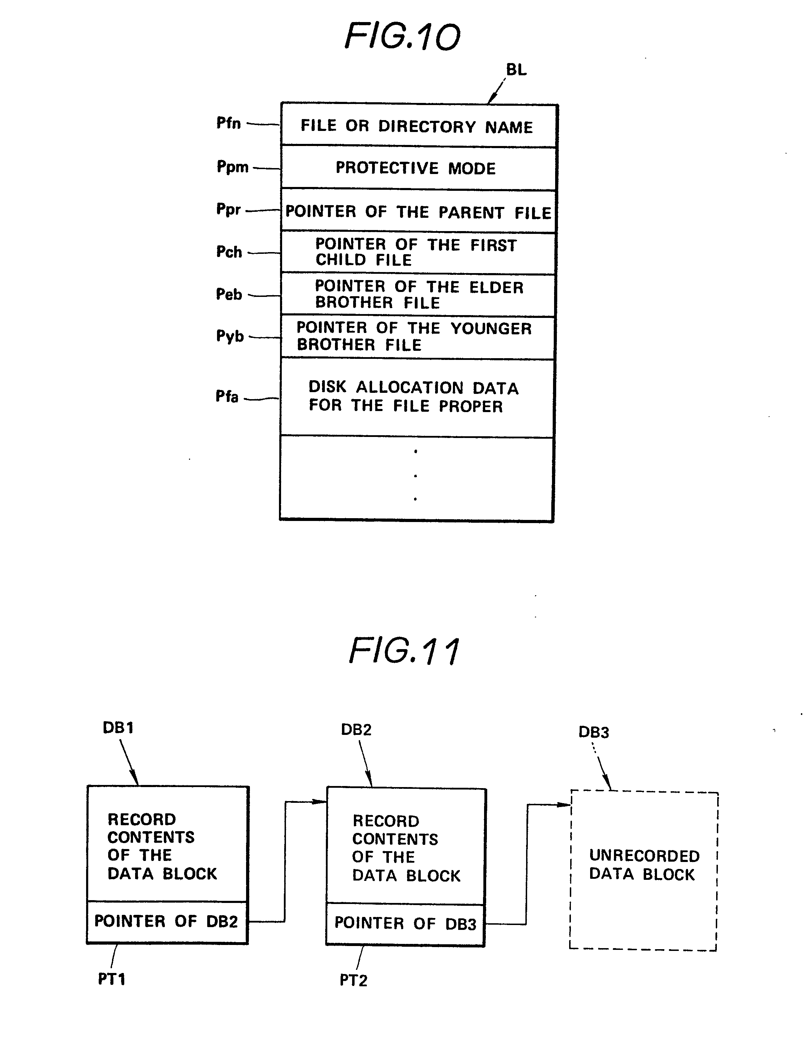

It will be noted that each block BL in the catalogue 11 corresponds to, for example, each disc allocation unit, such as one sector and that it is possible in general to write data of about 1024 bytes or 1 K bytes, for example, in each such block or sector. Hence, one such block BL can be subdivided, as shown for example in Figure 10, for previously providing storage sites or blocks for the aforementioned data, such as the storage block Pfn for the file or directory name, the storage block Ppm for the protective mode, the storage blocks Ppr, Pch, Peb and Pyb for the pointers, that is, the serial numbers of the respective blocks in the catalogue zone, of the file management data for the files or directories of the parent, first member, elder brother and the younger brother, or the storage block Pfa for the disc allocation data for the file proper.

When a file, for example, is written on the writable disc 10 having the catalogue zone provided with the aforementioned block contents, nothing is written in the storage block Pch for the first member or child of the block BL reserved as the storage location for the management data of this file, because files have no children files or directories. Alternatively, any data other than the block number may be written in this storage block BL. Conversely, when a directory is written on the disc, blank data or any data other than the disc allocation data are written in the storage location Pfa in the reserved block BL for the disc allocation data for the file proper. It will be noted that the data for discriminating between the files and the directories may also be recorded at the prescribed sites in the block.

A more generalized embodiment of the present invention will now be explained by referring to Figure 11. In this figure, a file itself or the file management data may be formed in each data block DB. At least a pointer storage part PT is provided in each data block DB for indicating the related other data block. In the pointer storage part PT of a given block DB, there is recorded a pointer for retrieving an unrecorded data block that is related or associated with the record contents of the data block.

Thus, it is supposed that, when the contents of the data blocks DB1, DB2, ... are sequentially related or associated with one another, recording is made in one of these data blocks, such as the data block DB2. At such time, an information or a pointer indicating for example the storage location of the next related unrecorded data block DB3 is simultaneously recorded in the pointer storage part PT1 of the data block DB2 such that the storage location for the next data block DB3 on the record medium is reserved, or appointed. While this is not favourable from the viewpoint of storage capacity of the memory medium, since any other contents can no longer be written in the storage location of the unrecorded data block DB3, it becomes possible to retrieve the added related data blocks from the existing data block without data re-writing so that favourable results sufficient to compensate for the aforementioned inconvenience may be expected in the case of the recording medium having a larger storage capacity but not susceptible of data re-writing, such as the writable optical disc. Even in the case of the recording medium susceptible of re-writing the record contents, the time and labour required in data re-writing may be dispensed with. In such manner, the present invention may be advantageously applied to a recording medium of the type for which the record contents need to be erased once before writing the new data, such as an opto-magnetic disc.

The present invention is not limited to the above described specific embodiment. For example, the various areas on the recording medium can be formed in any desired manner, while various file structures other than the tree structure, such as the linearly co-related file structure, can be formed by using a method according to the present invention.

0243186

13

CLAIMS

1. A method of forming a tree-structure file system on a random access type recording medium (10);
characterized by the steps of:
providing a catalogue zone (11) on the recording medium (10) for forming file management data sets;
writing in said catalogue zone (11) a root directory which is to be the parent of the tree-structure file system; and
reserving in said catalogue zone (11) a storage area for storing one of said file management data sets for a first member of said root directory at the time that the root directory is written in said catalogue zone (11).

2. A method according to claim 1 wherein said first member is a directory.

3. A method according to claim 1 wherein said first member is a file.

4. A method according to claim 1 wherein said reserving step comprises reserving in said catalogue zone (11) storage areas for storing file management data sets for a child directory of said root directory and a brother file of said root directory's child directory.

5. A method according to any one of the preceding claims wherein said writable storage means (10) is a writable optical disc (10).

6. A method of forming a tree-structure file system on a write-once random access type recording medium (10);
characterized by the steps of:
providing a catalogue zone (11) on the recording medium (10) for forming file management data sets;
writing in said catalogue zone (11) a root directory which is to be the parent of the tree-structure file system and at that time reserving in said catalogue zone (11) storage areas for separately storing file management data sets for descendant members of said root directory;

sequentially writing in said storage areas said root directory's descendant files and directories and at that time reserving in said catalogue zone (11) a plurality of secondary storage areas for storing separate ones of said file management data sets for the descendant files or directories of each said root directory's descendants.

7. A method of forming a tree-structure file system on a write once random access type recording medium (10);

characterized by the steps of:

providing a catalogue zone (11) on the recording medium (10); and writing in separate blocks in said catalogue zone (11) a hierarchy of directories and files, including file management data sets for each of said directories and files, said file management data sets including the serial numbers of as yet unrecorded blocks in said catalogue zone (11) for the brother and child files and directories of said directories and files being written in said catalogue zone (11).

8. A method according to any one of claims 3, 6 and 7 further comprising the step of forming a data zone (15) for storing document data on said recording medium (10).

9. A method according to claim 9 further comprising the step of recording data for said file in said data zone.

10. A method according to any one of claims 1, 6 and 7 further comprising the steps of forming a delete zone (14), forming a status zone (13), and forming a super block (12) for writing disc identification data sets and a head address of each zone.

11. A method according to claim 7 further comprising the steps of writing into said unrecorded blocks said brother and child files and directories.

12. A method of forming a file system on a write once random access type recording medium (10);

characterized by the steps of:

forming on said medium (10) a plurality of data blocks for storing related data;

recording data in said data blocks and recording in each data block at that time the location of the next data block in which related data is to be written.

## FIG. 1A

## FIG. 1B

| | |
|---|---|
| BL1 | ROOT DIRECTORY RT |
| BL2 | DIRECTORY D10 |
| BL3 | DIRECTORY D11 |
| BL4 | FILE F20 |
| BL5 | DIRECTORY D20 |
| BL6 | FILE F10 |
| BL7 | ( THE FIRST CHILD OF D11 ) |
| BL8 | ( BROTHER OF F10 ) |
| BL9 | ( BROTHER OF D20 ) |
| BL10 | ( THE FIRST CHILD OF D20 ) |

# FIG.2

10

SUPER BLOCK A —12A
SUPER BLOCK B —12B
} 12

STATUS ZONE A —13A
} 13
STATUS ZONE B —13B

CATALOG ZONE —11

DELETE ZONE —14

DATA ZONE —15

# FIG.3

0243186

# FIG.4

# FIG.5A

# FIG.5B

## FIG.6A

## FIG.6B

| | |
|---|---|
| BL1 | RT |
| BL2 | D10 |
| BL3 | ( BROTHER OF D10 ) |
| BL4 | ( THE FIRST CHILD OF D10 ) |

## FIG.7A

FILE DATA

## FIG.7B

| | |
|---|---|
| BL1 | RT |
| BL2 | D10 |
| BL3 | ( BROTHER OF D10 ) |
| BL4 | F20 |
| BL5 | ( BROTHER OF F20 ) |

# FIG.8A

# FIG.8B

| | |
|---|---|
| BL1 | RT |
| BL2 | D10 |
| BL3 | D11 |
| BL4 | F20 |
| BL5 | (BROTHER OF F20) |
| BL6 | (BROTHER OF D11) |
| BL7 | (THE FIRST CHILD OF D11) |

0243186

## FIG.9A

## FIG.9B

| | |
|---|---|
| BL1 | RT |
| BL2 | D10 |
| BL3 | D11 |
| BL4 | F20 |
| BL5 | (BROTHER OF F20) |
| BL6 | F10 |
| BL7 | (THE FIRST CHILD OF D11) |
| BL8 | (BROTHER OF F10) |

0243186

# FIG.10

BL

| | |
|---|---|
| Pfn | FILE OR DIRECTORY NAME |
| Ppm | PROTECTIVE MODE |
| Ppr | POINTER OF THE PARENT FILE |
| Pch | POINTER OF THE FIRST CHILD FILE |
| Peb | POINTER OF THE ELDER BROTHER FILE |
| Pyb | POINTER OF THE YOUNGER BROTHER FILE |
| Pfa | DISK ALLOCATION DATA FOR THE FILE PROPER |
| | .
.
. |

# FIG.11

DB1

DB2

DB3

RECORD CONTENTS OF THE DATA BLOCK

POINTER OF DB2

RECORD CONTENTS OF THE DATA BLOCK

POINTER OF DB3

UNRECORDED DATA BLOCK

PT1

PT2